# EUROPEAN PATENT APPLICATION

(11) **EP 2 169 874 A1**
(43) Date of publication of application: **31.03.2010**
(21) Application number: 08800696.0
(22) Date of filing: 28.08.2008
(51) Int. Cl.: H04L 12/18

(54) **MULTICAST PACKETS FORWARDING METHOD, APPARATUS AND MULTICAST SYSTEM**

(30) Priority: 28.08.2007 CN 200710145592
(71) Applicant: Huawei Technologies Co., Ltd., Longgang District, Shenzhen Guangdong 518129 (CN)
(72) Inventor: HUANG, Yong, Guangdong 518129 (CN); ZHA, Min, Guangdong 518129 (CN)
(74) Representative: Thun, Clemens
(86) International application number: PCT/CN2008/072184
(87) International publication number: WO 2009/030160

(57) **Abstract**

A multicast packet forwarding method is applied to forward multicast packets from an ingress node to egress nodes of a multicast group in a network domain, and at least one network node in the multicast network domain performs the following steps. A multicast packet of a multicast group is received. Node information about the egress nodes that the multicast packet needs to reach is determined, in which the egress nodes that need to be reached include the egress nodes successfully joining in the multicast group. The node information about the egress nodes that the multicast packet needs to reach is added in the multicast packet. The multicast packet carrying the node information about the egress nodes is sent out. A multicast packet forwarding apparatus and a multicast system are also provided.

## Description

### FIELD OF THE TECHNOLOGY

The present invention relates to multicast technology, and more particularly to multicast packet forwarding technologies.

### BACKGROUND

Currently, a network node may send an identical packet to other network nodes in at least two ways, i.e. in a unicast mode and a multicast mode. In the unicast mode, a source network node needs to continuously generate a plurality of identical packets, and send the packets respectively to destination network nodes. In actual applications, some packets are sensitive to time delay, or in other words, these packets, if having a long time delay to reach the destination network nodes (also referred to as egress nodes in the network), may have negative effects on subsequent processes. Additionally, if the source network node generates too many identical packets, it is also a heavy burden for the node itself, and the multicast mode can fitly solve the foregoing problems. In the multicast mode, the source network node only needs to generate a packet once instead of generating identical packets for many times, and all the network nodes that join in the multicast group can receive this packet. As compared with the unicast mode, the time delay for the packet to reach the destination network nodes is decreased, and the burden of the source network node itself is reduced.

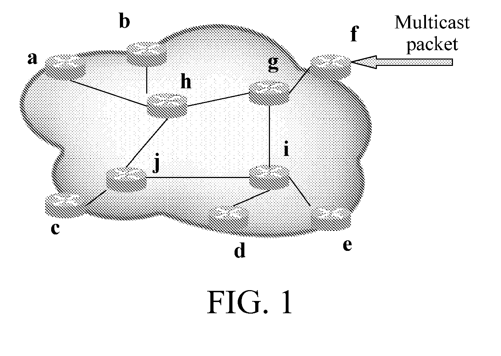

FIG. 1 is a schematic view of realizing multicast in a network domain. As shown in FIG. 1, network nodes a, b, c, d, e, and f are border nodes of the network domain, and network nodes g, h, i, and j are intermediate nodes of the network domain, i.e. within the network domain, all the network nodes other than the border nodes in the network domain can be called intermediate nodes of the network domain. The network node f is an ingress node of a multicast packet in the network domain. If the network nodes a, c, and d join in a multicast group corresponding to the multicast packet, the network nodes a, c, and d are egress nodes of the multicast packet in the network domain. When the multicast packet reaches the network node f, the network node f forwards the multicast packet to the network node g, and the network node g forwards the multicast packet to the network nodes h and i. On receiving the multicast packet, the network node h forwards the multicast packet to the network nodes a and j, and the network node j further forwards the multicast packet to the network node c. On receiving the multicast packet, the network node i forwards the multicast packet to the network nodes d and j, and the network node j further forwards the multicast packet to the network node c. Certainly, since there are two paths bearing multicast packets between the network nodes g and c, when the network node g forwards the multicast packet to the network nodes h and i, the network nodes h and i may have only one node to send the multicast packet to the network node j.

During the process of implementing the present invention, the inventors found that, in actual applications, in order to forward a multicast packet, a network node not only needs to generate a multicast path for the multicast packet according to a specific multicast protocol, but also needs to maintain the multicast path. When the network node joins in a plurality of multicast groups, the network node needs to maintain a plurality of multicast paths. As a result, the workload of the network node is heavy, and the network node may not forward the multicast packet in time, thereby easily causing network congestion.

### SUMMARY

Accordingly, the present invention is directed to a multicast packet forwarding method, a multicast packet forwarding apparatus, and a multicast system, so as to reduce the burden of a network node that joins in a multicast group, thereby avoiding network congestion.

The present invention provides a multicast packet forwarding method, applied to forward multicast packets from an ingress node to egress nodes of a multicast group in a network domain. At least one network node in the multicast network domain performs the following steps. A multicast packet of a multicast group is received. Node information about the egress nodes that the multicast packet needs to reach is determined, and the egress nodes that need to be reached include the egress nodes successfully joining in the multicast group. The node information about the egress nodes that the multicast packet needs to reach is added into the multicast packet. The multicast packet carrying the node information about the egress nodes is sent out.

The present invention further provides a multicast packet forwarding apparatus, which includes a multicast packet receiving unit, an information determination unit, and a multicast packet forwarding unit. The multicast packet receiving unit is adapted to receive a multicast packet of a multicast group. The information determination unit is adapted to determine node information about egress nodes that the multicast packet needs to reach, where the egress nodes that need to be reached include the egress nodes successfully joining in the multicast group. The multicast packet forwarding unit is adapted to add, according to the information, determined by the information determination unit and about all the egress nodes that are downstream nodes of the network node and that the multicast packet needs to reach, the node information about the egress nodes that the multicast packet needs to reach, into the multicast packet, and send the multicast packet carrying the node information about the egress nodes.

The present invention further provides a multicast system, which includes an ingress node, intermediate nodes, and egress nodes. The ingress node is adapted to receive a multicast packet, determine information about all downstream egress nodes of the multicast group, and forward the multicast packet according to the information about all the downstream egress nodes of the multicast group. The intermediate nodes are adapted to receive the multicast packet sent by the ingress node or the adjacent upstream intermediate nodes, determine the information about all the downstream egress nodes of the multicast group, and forward the multicast packet according to the information about all the downstream egress nodes of the multicast group. The egress nodes are adapted to receive the multicast packet sent by the adjacent upstream intermediate nodes.

In the embodiments of the present invention, the network node may forward the multicast packet merely according to the information about all the egress nodes of the multicast group downstream the network node, which does not need to generate a multicast path for the multicast packet according to a specific multicast protocol, nor need to maintain the multicast path. In this manner, the workload of the network node is lightened, thereby avoiding network congestion.

### BRIEF DESCRIPTION OF THE DRAWINGS

FIG. 1 is a schematic view of a network supporting multicast in the prior art;
FIG. 2 is a flow chart of an integral technical solution of a multicast packet forwarding method according to an embodiment of the present invention;
FIG. 3 is a flow chart of a multicast packet forwarding method according to an embodiment of the present invention;
FIG. 4 is a flow chart of another multicast packet forwarding method according to an embodiment of the present invention;
FIG. 5 is a schematic structural view of an integral technical solution of a multicast packet forwarding apparatus according to an embodiment of the present invention;
FIG. 6 is a schematic structural view of a multicast packet forwarding apparatus according to an embodiment of the present invention;
FIG. 7 is a schematic structural view of another multicast packet forwarding apparatus according to an embodiment of the present invention; and
FIG. 8 is a schematic structural view of a multicast system according to an embodiment of the present invention.

### DETAILED DESCRIPTION OF THE EMBODIMENTS

Since terms such as upstream and downstream will appear many times in the following, descriptions about the related terms are given below with reference to FIG. 1, so as to make persons of ordinary skill in the art understand the disclosure more clearly.

As shown in FIG. 1, when a multicast packet reaches a network node f, the network node f forwards the multicast packet to a network node g. The network node g then forwards the multicast packet to network nodes h and i. On receiving the multicast packet, the network node h forwards the multicast packet to network nodes a and j, and the network node j further forwards the multicast packet to a network node c. On receiving the multicast packet, the network node i forwards the multicast packet to network nodes d and j, and the network node j further forwards the multicast packet to the network node c. Referring to FIG. 1, the packet is forwarded from an ingress node to egress nodes of a multicast group in a network domain, and the multicast packet enters the network domain from the network node f. The network nodes a, b, c, d, e, and f are border nodes of the network domain, and the network nodes g, h, i, and j are intermediate nodes of the network domain, i.e. within the network domain, all the network nodes other than the border nodes in the network domain can be called intermediate nodes of the network domain. The network node f is an ingress node of a multicast packet in the network domain (which may be referred to as an ingress network node or an ingress node for short). If the network nodes a, c, and d join in a multicast group corresponding to the multicast packet, the network nodes a, c, and d are egress nodes of the multicast packet in the network domain (which may be referred to as egress network nodes or egress nodes for short).

The network nodes f and g are called upstream network nodes (which may be referred to as upstream nodes for short) of the network node h corresponding to the multicast packet. Since the multicast packet directly reaches the network node h through the network node g, the network node g is also called an adjacent upstream network node (which may be referred to as an adjacent upstream node for short) of the multicast packet corresponding to the network node h. Likewise, the network nodes a, j, and c are called downstream network nodes (which may be referred to as downstream nodes for short) of the multicast packet corresponding to the network node h, and the network nodes a and j are also called adjacent downstream network nodes (which may be referred to as adjacent downstream nodes for short) of the multicast packet corresponding to the network node h.

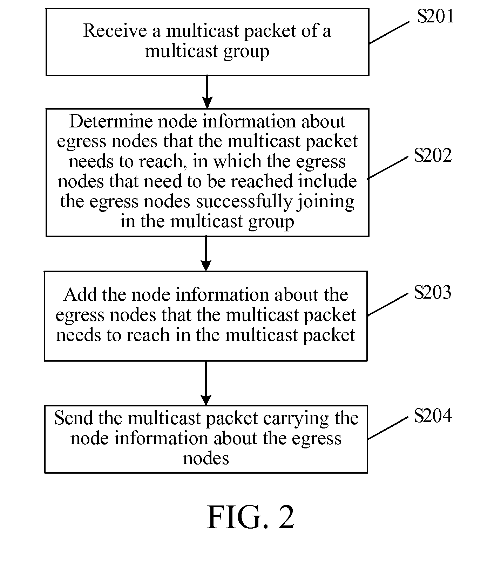

Firstly, an integral technical solution of a multicast packet forwarding method according to an embodiment is illustrated below. Referring to FIG. 2, an embodiment of a multicast packet forwarding method is applied to forward a multicast packet from an ingress node to egress nodes of a multicast group in a network domain, and at least one network node in the multicast network performs the following steps.

In step S201, a multicast packet of a multicast group is received.

In step S202, node information about egress nodes that the multicast packet needs to reach is determined, and the egress nodes that need to be reached include the egress nodes successfully joining in the multicast group.

In step S203, the node information about the egress nodes that the multicast packet needs to reach is added into the multicast packet.

In step S204, the multicast packet carrying the node information about the egress nodes is sent out.

It should be noted that, the receiving the multicast packet and the determining the information about all the egress nodes of the multicast group downstream the network node do not need to be performed in sequence, that is, either of the above two steps can be performed first. Additionally, the term "downstream" mentioned herein and hereinafter refers to downstream of an entity that performs the multicast packet forwarding method, i.e. downstream of the network node.

The node information about the egress nodes that the multicast packet needs to reach and determined by the network node is node information about a second egress node, and the determining, by the network node, the node information about the egress nodes that the multicast packet needs to reach includes the following steps.

If the received multicast packet of the multicast group carries node information about a first egress node that the multicast packet needs to reach determined by an upstream network node of the network node, the network node determines the node information about a second egress node that the multicast packet needs to reach according to the node information about a first egress node that needs to be reached carried in the received multicast packet and border nodes information corresponding to downstream network nodes adjacent to the network node.

Alternatively, the network node determines the node information about a second egress node that the multicast packet needs to reach according to node information, pre-configured locally in the network node, about all the egress nodes of the multicast group downstream the network node.

Alternatively, the network node directly determines the node information about a second egress node that the multicast packet needs to reach according to node information, provided by other network entities, about all the egress nodes of the multicast group downstream the network node.

The node information is an information set that includes the information about the egress nodes, or a result obtained after performing an operation on the node information about the egress nodes.

The determining, by the network node, the node information about a second egress node that the multicast packet needs to reach according to the node information about a first egress node that needs to be reached carried in the received multicast packet and the pre-configured information about the border nodes corresponding to the network node specifically includes the following steps.

If the node information about a first egress node is a first information set that includes the node information about the egress nodes, and the node information about the border nodes corresponding to the network node is a second information set that includes the node information about the border nodes, the network node compares the information in the two information sets, and if the node information about one border node in the second information set is consistent with the node information about the egress nodes in the first information set, the information about the border node is determined to be the node information about a second egress node.

If the node information about a first egress node carried in the multicast packet is a result obtained after performing an operation on the node information about the egress nodes, and the information about the border nodes corresponding to the downstream network nodes adjacent to the network node is a result obtained after performing an operation on the node information about the border nodes, the two results are operated to determine the node information about a second egress node that the multicast packet needs to reach.

The information about the egress node is an identifier of the egress node. The identifier of the egress node is placed in a multi-protocol label switching (MPLS) label, a header of a provider backbone transport (PBT), or an extended IP header.

If the information about all the egress nodes of the multicast group downstream the upstream network node adjacent to the network node is a result obtained after performing an operation on the information about all the egress nodes of the multicast group downstream the upstream network node adjacent to the network node, the information about all the egress nodes of the multicast group downstream the upstream network node adjacent to the network node and the information about all the border nodes corresponding to the network node are operated to obtain a result of the information about all the egress nodes of the multicast group downstream the network node. The information about the border nodes corresponding to the network node is a result obtained after performing an operation on the information about all the border nodes corresponding to the network node.

If the information about the border node in the network domain is an identifier of the border node and the identifiers of every two border nodes are orthogonal, the operation between the information about all the egress nodes that are downstream the adjacent upstream network node and that the multicast packet needs to reach is an OR operation, the operation between the information about all the border nodes corresponding to the network node is an OR operation, and the operation between the two results obtained by the OR operation is an AND operation.

Before the determining, by the network node, the information about all the egress nodes that are downstream the network node and that the multicast packet needs to reach, the method further includes: obtaining multicast forwarding indication information capable of denoting the information, provided by other network entities, about all the egress nodes of the multicast group downstream the network node. The multicast forwarding indication information is generated by the other network entities according to a received multicast join request sent by the border nodes or the pre-configured information about all the egress nodes of the multicast group downstream the network node. The multicast join request at least includes the information about the multicast group that needs to be joined in and the information about the border nodes.

It should be noted that, in actual applications, if at least one border node in a network domain needs to join in a multicast group, the border node may directly send a multicast join request message to an ingress node of a multicast packet in the network domain. Alternatively, the border node may send a multicast join request message to another network entity (such as a so-called multicast forwarding computing unit), and then the network entity provides information about the multicast group that needs to be joined in and information about the border node to the ingress node. Certainly, all the border nodes that need to join in the multicast group may send a multicast join request message to the multicast forwarding computing unit, and the multicast forwarding computing unit performs a certain operation on the information about the border nodes, generates multicast forwarding indication information, and provides the multicast forwarding indication information to the ingress node. The multicast forwarding indication information may be an operation result or information that carries the operation result.

Before the forwarding the multicast packet, the method further includes: adding the information about all the egress nodes of the multicast group downstream the network node in the multicast packet.

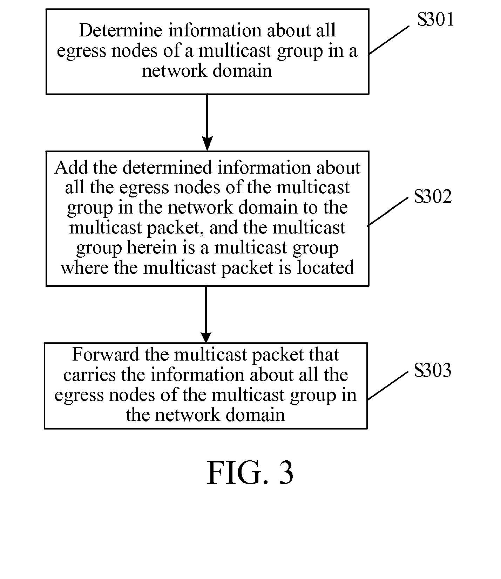

Specifically, the integral technical solution provided in the above embodiment of the method may be implemented by an ingress node in a network domain. Referring to FIG. 3, descriptions are given below on an embodiment of a multicast packet forwarding method in a circumstance that an ingress node acts as an implementing entity of the method. The method includes the following steps.

In Step S301, information about all egress nodes of a multicast group in a network domain is determined.

The information about the egress node may be an identifier of the egress node, a name of the egress node, or other information about the egress node, as long as the information about the egress node is capable of uniquely identifying the egress node. If the information about the egress node is an identifier of the egress node, the identifier may be placed in an MPLS label, a header of a PBT, or an extended IP header.

The information about all the egress nodes may be an information set of the information about all the egress nodes, and in this information set, the information about the egress nodes is independent of each other. The information about all the egress nodes may also be a result obtained after performing an operation on the information about all the egress nodes. If the information about the egress node is an identifier of the egress node, the information about all the egress nodes may be a result obtained by performing an OR operation on the identifiers of all the egress nodes.

Further, in this embodiment, the ingress node (such as the network node f shown in FIG. 1) may determine the information about all the egress nodes in various manners. For example, the other network nodes (such as the network nodes a, b, c, d, e, g, h, i, and j shown in FIG. 1) in the network domain send a request for joining in the multicast group to the ingress node. The ingress node receives the request for joining in the multicast group sent by a certain network node, and the request message carries the information about the network node. In this manner, the ingress node obtains the information about the network node from the request message, and the other network nodes may be border nodes or intermediate nodes, that is, the ingress node obtains the information about the border nodes successfully joining in the multicast group (such as the information about the network nodes a, c, d, and e shown in FIG. 1), and thus obtains the information about all the egress nodes of the multicast group. Certainly, if necessary, the ingress node may summarize the information about all the egress nodes at any time. Alternatively, the ingress node may obtain the information about all the egress nodes that has been summarized from other network nodes. Here, the information about all the egress nodes that has been summarized may be an information set of the information about all the egress nodes or a result obtained after performing an operation on the information about all the egress nodes.

In Step S302, the determined information about all the egress nodes of the multicast group in the network domain is added in the multicast packet. The multicast group herein is the multicast group where the multicast packet is located.

If the information about all the egress nodes is an information set of the information about all the egress nodes, the information set is directly added in the multicast packet. If the information about all the egress nodes is a result obtained after performing an operation on the information about all the egress nodes, the result is directly added in the multicast packet.

In Step S303, the multicast packet that carries the information about all the egress nodes of the multicast group in the network domain is forwarded.

The ingress node may forward the multicast packet to a downstream intermediate node adjacent to the ingress node. After receiving the multicast packet, the downstream intermediate node adjacent to the ingress node, such as the network node g shown in FIG. 1, determines the information about all the border nodes corresponding to each of the adjacent downstream network nodes, and then determines the information about all the egress nodes that each of the adjacent downstream network nodes needs to reach according to the information about the egress nodes of the multicast group carried in the multicast packet and the information about all the border nodes corresponding to each of the adjacent downstream network nodes. The network node carries the information about all the egress nodes that a certain adjacent downstream network node needs to reach in the multicast packet to be sent to the adjacent downstream network node, for example, the network node g carries the information about all the egress nodes that the network node h needs to reach in the multicast packet to be sent to the network node h. The rest may be deduced by analogy until the multicast packet reaches every egress node.

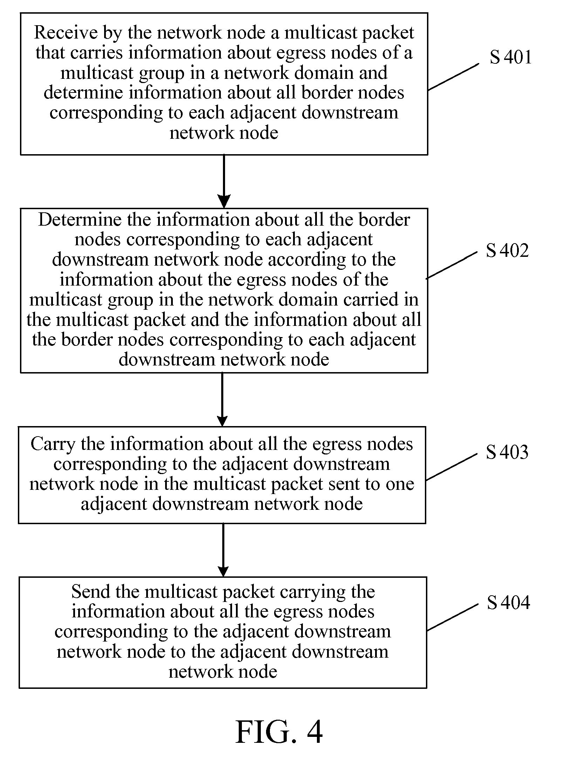

The integral technical solution provided in the above embodiment of the method may also be implemented by an intermediate node in a network domain other than the ingress node and the egress nodes. Referring to FIG. 4, descriptions are given below on an embodiment of a multicast packet forwarding method in a circumstance that an intermediate node acts as an implementing entity of the method. The method includes the following steps.

In Step S401, the network node receives a multicast packet that carries information about egress nodes of a multicast group in a network domain, and determines information about all border nodes corresponding to each adjacent downstream network node.

If the entity that implements this step is a downstream intermediate node adjacent to an ingress node (such as a network node g shown in FIG. 1), the information about the egress nodes of the multicast group carried in the multicast packet is the information about all the egress nodes of the multicast group in the network domain. If the entity that implements this step is not adjacent to the ingress node, such as the network node h or i shown in FIG. 1, the multicast packet is forwarded from the network node g to the network node h or i. The information about the egress nodes of the multicast group carried in the multicast packet may be the information about all the egress nodes of the multicast group in the network domain, i.e., the information about all the egress nodes of the multicast group corresponding to the network node f. The information about the egress nodes of the multicast group carried in the multicast packet may also be the information about all the egress nodes of the multicast group corresponding to upstream network nodes adjacent to the implementing entity, i.e., the information about all the egress nodes of the multicast group corresponding to the network node g.

The information about the egress node may be an identifier of the egress node, a name of the egress node, or other information about the egress node, as long as the information about the egress node is capable of uniquely identifying the egress node. If the information about the egress node is an identifier of the egress node, the identifier may be placed in an MPLS label, a header of a PBT, or an extended IP header.

If the information about the egress nodes of the multicast group carried in the multicast packet is the information about all the egress nodes of the multicast group in the network domain, the information about all the egress nodes may be an information set of the information about all the egress nodes. The information about all the egress nodes may also be a result obtained after performing an operation on the information about all the egress nodes. If the information about the egress node is an identifier of the egress node, the information about all the egress nodes may be a result obtained by performing an OR operation on the identifiers of all the egress nodes.

The information about all the egress nodes that each adjacent downstream network node needs to reach, similar to the information about all the egress nodes corresponding to the ingress node, may be an information set of the information about all the egress nodes. The information about all the egress nodes may also be a result obtained after performing an operation on the information about all the egress nodes. If the information about the egress node is an identifier of the egress node, the information about all the egress nodes may be a result obtained by performing an OR operation on the identifiers of all the egress nodes, and this result may also be called a mask.

Additionally, the intermediate node may determine the information about all the border nodes corresponding to each adjacent downstream network node in various manners. For example, all the border nodes corresponding to each adjacent downstream network node may directly report their own information to the intermediate node without through the adjacent downstream network nodes. Alternatively, after obtaining the information about all the border nodes corresponding thereto, each adjacent downstream network node summarizes the information about all the border nodes corresponding thereto and then provides the information to the intermediate node.

In Step S402, the information about all the border nodes corresponding to each adjacent downstream network node is determined according to the information about the egress nodes of the multicast group in the network domain carried in the multicast packet and the information about all the border nodes corresponding to each adjacent downstream network node.

If the received multicast packet of the multicast group carries node information about a first egress node that the multicast packet needs to reach determined by an upstream network node of the network node, the network node determines node information about a second egress node that the multicast packet needs to reach according to the node information about a first egress node that needs to be reached carried in the received multicast packet and border nodes information corresponding to downstream network nodes adjacent to the network node.

Alternatively, the network node determines the node information about a second egress node that the multicast packet needs to reach according to node information, pre-configured locally in the network node, about all the egress nodes of the multicast group downstream the network node.

Alternatively, the network node directly determines the node information about a second egress node that the multicast packet needs to reach according to node information, provided by other network entities, about all the egress nodes of the multicast group downstream the network node.

If the information about the egress nodes of the multicast group in the network domain carried in the multicast packet is a first information set of the information about the egress nodes of the multicast group in the network domain, and the information about all the border nodes corresponding to a certain adjacent downstream network node is a second information set of the information about all the border nodes, comparisons can be made between the two information sets. If the information about one egress node in the first information set is consistent with the information about one border node in the second information set, the border node is determined to be an egress node that the multicast packet corresponding to the adjacent downstream network node needs to reach. The rest may be deduced by analogy that, all the egress nodes corresponding to each adjacent downstream network node can be determined. Certainly, some adjacent downstream network nodes are not corresponding to any egress node that the multicast packet needs to reach. In this manner, when the multicast packet is forwarded, it is unnecessary to forward the multicast packet to the adjacent downstream network node.

If the information about the egress nodes of the multicast group carried in the multicast packet is a result obtained after performing an operation on the information about the egress nodes, and the information about all the border nodes corresponding to each adjacent downstream network node is a result obtained after an operation, the two results are operated to obtain a result after performing an operation on the information about all the egress nodes corresponding to each adjacent downstream network node. For example, if the information about the egress nodes of the multicast group carried in the multicast packet is a result obtained by performing an OR operation on a plurality of mutually orthogonal identifiers of the egress nodes, an AND operation is performed on a mask corresponding the adjacent downstream network node and the result to obtain a result corresponding to the adjacent downstream network node. The mask is generated by performing an OR operation on the identifiers of all the border nodes corresponding to the adjacent downstream network node. It should be noted that, if a result obtained after performing an AND operation on the mask corresponding one adjacent downstream network node and the information about the egress nodes of the multicast group carried in the multicast packet is 0, it indicates that the adjacent downstream network node is not corresponding to any egress node of the multicast group. Therefore, when the multicast packet is forwarded, it is unnecessary to forward the multicast packet to the adjacent downstream network node.

In Step S403, the multicast packet sent to one adjacent downstream network node carries the information about all the egress nodes corresponding to the adjacent downstream network node.

If the information about all the egress nodes is an information set of the information about all the egress nodes, the information set is directly added in the multicast packet. If the information about all the egress nodes is a result obtained after performing an operation on the information about all the egress nodes, the result is directly added in the multicast packet.

In Step S404, the multicast packet that carries the information about all the egress nodes corresponding to the adjacent downstream network node is sent to the adjacent downstream network node.

It should be noted that, in Step S401, if one adjacent downstream network node is an egress node, the information about all the border nodes corresponding to the adjacent downstream network node is determined, which substantially determines whether the egress node is an egress node of the multicast group. Specifically, if the information about the egress nodes of the multicast group carried in the multicast packet is an information set of the information about the egress nodes, comparisons can be made between the information about the egress border node and the information in the information set of the information about the egress nodes. If a piece of information in the information set of the information about the egress nodes is consistent with the information about the border node, the border node is determined to be an egress node of the multicast group. If the information about the egress nodes of the multicast group carried in the multicast packet is a result obtained after performing an operation on the information about the egress nodes, the information about the egress node and the result are operated to determine whether the egress node is an egress node of the multicast group. For example, if the information about the egress nodes of the multicast group carried in the multicast packet is a result obtained by performing an OR operation on a plurality of mutually orthogonal identifiers of the egress nodes, an AND operation is performed on the identifier of the egress node and the result. If the obtained result is an identifier of the egress node, the egress node is determined to be an egress node of the multicast group.

Another embodiment of a multicast packet forwarding method is illustrated in the following. Still taking FIG. 1 as an example, the network node f is an ingress node, the network nodes g, h, and i are intermediate nodes, and the network nodes a, b, c, d, and e are egress nodes. Identifiers of the egress nodes are 0x00001, 0x00002, 0x00004, 0x00008, and 0x00010 respectively, which are orthogonal to each other, that is, the result of an AND operation on two arbitrary identifiers is 0. The network nodes a, c, and d are egress nodes of a multicast group.

The ingress node f determines that the information about all the egress nodes of the multicast group is a label 0x0000d (0x0000d = a|c|d=0x00001|0x00004|0x00008) of the multicast packet. The network node f adds the label 0x0000d of the multicast packet in the multicast packet and forwards the label to the intermediate node g. Two intermediate nodes are downstream the network node g. One is the intermediate node h having a corresponding mask 0x00007= a|b|c=0x00001|0x00002|0x00004, and the other is the intermediate node i having a corresponding mask 0x00018=d|e=0x00008|0x00010. After receiving the multicast packet, the intermediate node g performs an AND operation on the multicast label 0x0000d and the above two masks respectively. A result obtained after the AND operation with the mask corresponding the intermediate node h is 0x00005, and a result obtained after the AND operation with the mask corresponding the intermediate node i is 0x00008. The intermediate node g adds 0x00005 in a replicated multicast packet to replace the multicast label 0x0000d, and forwards the multicast packet carrying the multicast label 0x00005 to the intermediate node h. The intermediate node g adds 0x00008 in another replicated multicast packet to replace the multicast label 0x0000d, and forwards the multicast packet carrying the multicast label 0x00008 to the intermediate node i. The intermediate nodes h and i may adopt the same manner as the intermediate node g to forward a multicast packet carrying a multicast label 0x00001, a multicast packet carrying a multicast label 0x00004, and a multicast packet carrying a multicast label 0x00008 to the egress nodes a, c, and d respectively.

In the above embodiments, the intermediate nodes may generate masks according to unicast routes, thereby effectively applying all the advantages of the existing unicast routes, such as rapid performance of routing protection and utilization of mature unicast routing protocols. Moreover, the intermediate nodes replace the multicast label of the received multicast packet with a newly-generated multicast label, so as to effectively avoid the loop.

In the above embodiments, when a plurality of multicast packets needs to be forwarded in the same multicast path, the ingress node and the intermediate nodes may add identical multicast labels in these multicast packets. Additionally, when one egress border node requests to join in a multicast group so as to become an egress node of the multicast group or one egress node requests to exit the multicast group, the ingress node needs to re-generate a multicast label, and a result of an AND operation performed by the related intermediate node on the multicast label and the mask corresponding the adjacent downstream node changes, but the principle of the forwarding process is not affected. Still taking FIG. 1 as an example, when the border node e requests to join in a multicast group, the ingress node needs to perform an OR operation on the egress nodes a, c, d, and e to obtain a multicast label. The masks of the intermediate nodes h and i remain the same, but a result obtained after performing an AND operation on the multicast label and the mask corresponding the intermediate node i changes. This operation result should be a result obtained after performing an OR operation on the identifiers of the egress nodes d and e.

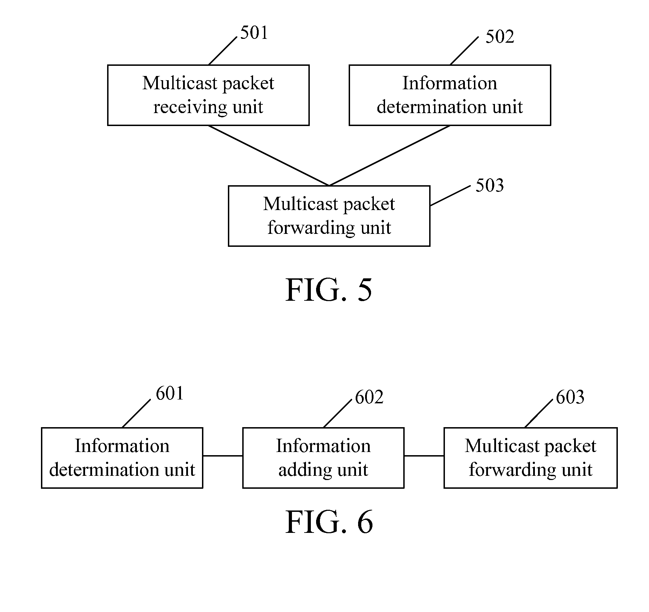

The above embodiments of the method can be implemented by apparatus in various forms. Firstly, an integral technical solution of an embodiment of a multicast packet forwarding apparatus is described in the following. The multicast packet forwarding apparatus may be disposed in a network node within a network domain. Referring to FIG. 5, the multicast packet forwarding apparatus includes a multicast packet receiving unit 501, an information determination unit 502, and a multicast packet forwarding unit 503. The multicast packet receiving unit 501 is adapted to receive a multicast packet. The information determination unit 502 is adapted to determine information about all downstream egress nodes of a multicast group received by the multicast packet receiving unit 501, i.e., determine information about egress nodes that the multicast packet needs to reach, in which the egress nodes that need to be reached include the egress nodes successfully joining in the multicast group. The multicast packet forwarding unit 503 is adapted to add the node information about the egress nodes that the multicast packet needs to reach in the multicast group according to the information about all the downstream egress nodes of the multicast group determined by the information determination unit 502, and forward the multicast packet received by the multicast packet receiving unit 501.

Specifically, the above embodiment of the apparatus may be applied to an ingress node in a network domain. In this case, the embodiment of the multicast packet forwarding apparatus is as shown in FIG. 6, which specifically includes an information determination unit 601, an information adding unit 602, and a multicast packet forwarding unit 603. The information determination unit 601 is adapted to determine information about all egress nodes of a multicast group in the network domain. The information adding unit 602 is adapted to add the information about all the egress nodes of the multicast group in the network domain determined by the information determination unit 601 in a multicast packet. The multicast packet forwarding unit 603 is adapted to forward the multicast packet carrying the information about all the egress nodes of the multicast group in the network domain processed by the information adding unit 602.

The information determination unit 601 may determine the information about all the egress nodes of the multicast group in the network domain in various manners. For example, the information determination unit 601 receives a request for joining in a multicast group sent by a certain border node, and the request message carries the information about the border node. In this manner, after the border node successfully joins in the multicast group, the information determination unit 601 substantially obtains information about an egress node of a multicast packet in the network domain. Certainly, the information determination unit 601 may obtain information about other network nodes, for example, information about the intermediate nodes, in the same manner. If necessary, the information determination unit 601 may summarize the information about all the egress nodes at any time. Alternatively, the information determination unit 601 may obtain the information about all the egress nodes that has been summarized from other network nodes. Here, the information about all the egress nodes that has been summarized may be an information set of the information about all the egress nodes or a result obtained after performing an operation on the information about all the egress nodes.

If the information about all the egress nodes is an information set of the information about all the egress nodes, the information adding unit 602 directly adds the information set in the multicast packet. If the information about all the egress nodes is a result obtained after performing an operation on the information about all the egress nodes, the information adding unit 602 directly adds the result in the multicast packet.

Additionally, the multicast packet forwarding unit 603 may forward the multicast packet carrying the information about all the egress nodes of the multicast group in the network domain to an adjacent downstream intermediate node.

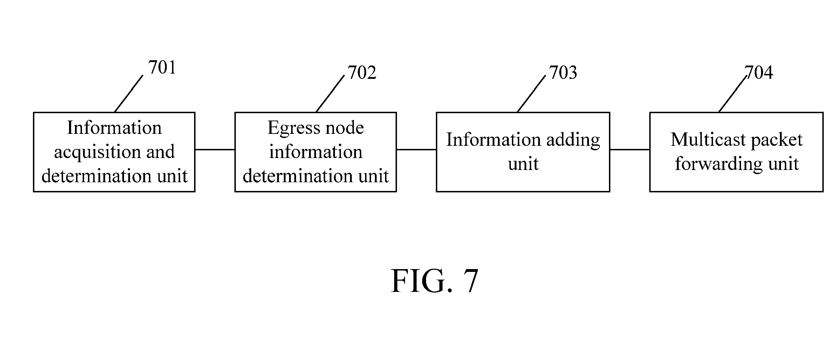

The integral technical solution of the above embodiment of the apparatus may also be applied to an intermediate node in a network domain other than the ingress node and the egress nodes. Referring to FIG. 7, the multicast packet forwarding apparatus includes an information acquisition and determination unit 701, an egress node information determination unit 702, an information adding unit 703, and a multicast packet sending unit 704. The information acquisition and determination unit 701 is adapted to obtain a multicast packet carrying information about egress nodes of a multicast group in a network domain and determine information about all border nodes corresponding to each adjacent downstream network node. The egress node information determination unit 702 is adapted to determine the information about all the egress nodes of the multicast group corresponding to each adjacent downstream network node according to the information about the egress nodes of the multicast group in the network domain carried in the multicast packet obtained by the information acquisition and determination unit 701 and the information about all the border nodes corresponding to each adjacent downstream network node determined by the information acquisition and determination unit 701. The information adding unit 703 is adapted to add the information about all the egress nodes of the multicast group corresponding to each adjacent downstream network node determined by the egress node information determination unit 702 in the multicast packet. The multicast packet sending unit 704 is adapted to forward the multicast packet carrying the information about all the egress nodes of the multicast group corresponding to each adjacent downstream network node processed by the information adding unit 703 to the corresponding adjacent downstream network nodes.

The information acquisition and determination unit 701 may determine the information about all the border nodes corresponding to each adjacent downstream network node in various manners. For example, all the border nodes corresponding to each adjacent downstream network node may directly report their own information without through the adjacent downstream network nodes. Alternatively, after obtaining the information about all the border nodes corresponding thereto, each adjacent downstream network node summarizes the information about all the border nodes corresponding thereto and then provides the information to the information acquisition and determination unit 701.

If the information about the egress nodes of the multicast group in the network domain carried in the multicast packet is a first information set of the information about the egress nodes in the network domain, and the information about all the border nodes corresponding to a certain adjacent downstream network node is a second information set of the information about all the border nodes, the egress node information determination unit 702 compares the two information sets. If the information about one egress node in the first information set is consistent with the information about one border node in the second information set, the border node is determined to be an egress node of the multicast packet corresponding to the adjacent downstream network node. The rest may be deduced by analogy that, the egress node information determination unit 702 determines all the egress nodes of the multicast group corresponding to each downstream network node adjacent to the network node. Certainly, some adjacent downstream network nodes are not corresponding to any egress node that the multicast packet needs to reach. In this manner, when the multicast packet sending unit 704 forwards the multicast packet, it is unnecessary to forward the multicast packet to the adjacent downstream network node.

If the information about the egress nodes of the multicast group carried in the multicast packet is a result obtained after performing an operation on the information about the egress nodes, and the information about all the border nodes corresponding to all the adjacent downstream network nodes is a result obtained after performing an operation on the information about all the border nodes, the egress node information determination unit 702 performs an operation on the two results to obtain a result after performing an operation on the information about all the egress nodes corresponding to each adjacent downstream network node. For example, if the information about the egress nodes of the multicast group carried in the multicast packet is a result obtained by performing an OR operation on a plurality of mutually orthogonal identifiers of the egress nodes, the egress node information determination unit 702 performs an AND operation on a mask corresponding the adjacent downstream network node and the result to obtain a result corresponding to the adjacent downstream network node. The mask is generated by performing an OR operation on identifiers of all the border nodes corresponding to the adjacent downstream network node. It should be noted that, if a result obtained after performing an AND operation on the mask corresponding one adjacent downstream network node and the information about the egress nodes of the multicast group carried in the multicast packet is 0, it indicates that the adjacent downstream network node is not corresponding to any egress node of this multicast group. Therefore, when the multicast packet sending unit 704 forwards the multicast packet, it is unnecessary to forward the multicast packet to the adjacent downstream network node.

If the information about all the egress nodes is an information set of the information about all the egress nodes, the information adding unit 703 directly adds the information set in the multicast packet. If the information about all the egress nodes is a result obtained after performing an operation on the information about all the egress nodes, the information adding unit 703 directly adds the result in the multicast packet.

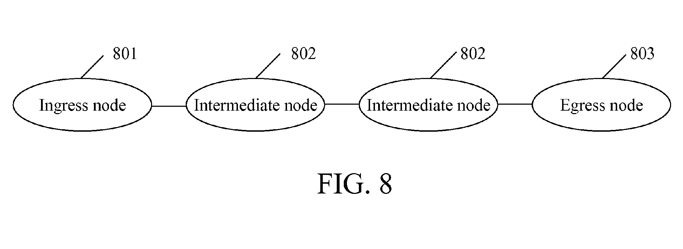

All the above embodiments of the method and apparatus are implemented in a multicast system. Therefore, the present invention further provides an embodiment of a multicast system, which is applied to a network domain. Referring to FIG. 8, the multicast system includes an ingress node 801, intermediate nodes 802, and egress nodes 803.

The ingress node 801 is adapted to receive a multicast packet, determine information about all egress nodes of the multicast packet in a network domain, and forward the multicast packet according to the information about all the egress nodes of the multicast packet in the network domain.

The intermediate nodes 802 are adapted to receive the multicast packet sent by the ingress node 801 or the adjacent upstream intermediate nodes 802, determine the information about all the downstream egress nodes of the multicast group, and forward the multicast packet according to the information about all the egress nodes of the multicast group downstream the network node.

The egress nodes 803 are adapted to receive the multicast packet sent by adjacent upstream intermediate nodes 802.

In all the embodiments of the present invention, the multicast packets having the same path may adopt one multicast label. In this manner, the intermediate nodes do not need to maintain the status of the multicast packets, nor need to employ a periodic maintenance mechanism, thereby realizing distributed control with no need to implement centralized maintenance on the multicast path. The embodiments of the present invention may be stacked on an existing MPLS network in an overlay manner or directly deployed in the MPLS network, which is convenient to implement. In all the embodiments of the present invention, the speed of the path failure recovery equals a point-to-point MPLS. In all the embodiments of the present invention, the forwarding processes of the multicast packet and the unicast packet are consistent, thereby solving the problem of extension of the multicast system and accelerating the speed of forwarding the multicast packet. Since the ingress node knows which egress nodes that the multicast packet will pass and the forwarding of the multicast packet is consistent with the forwarding of the unicast packet, the fault point may be quickly located and the management of forwarding the multicast packet is enhanced. The unicast technology is widely applied in the embodiments of the present invention, and thus few modifications are made to the existing network.

Persons of ordinary skill in the art should understand that all of or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disk, a read-only memory (ROM), or a random access memory (RAM).

The above descriptions are merely some exemplary embodiments of the present invention. It is apparent to persons of ordinary skill in the art that modifications and variations can be made without departing from the principle of the present invention, and the modifications and variations shall also fall within the protection scope of the present invention.

## Claims

1. A multicast packet forwarding method, applied to forward multicast packets from an ingress node to egress nodes of a multicast group in a network domain, wherein at least one network node in the multicast network domain performs the following steps:
receiving a multicast packet of a multicast group;
determining node information about the egress nodes that the multicast packet needs to reach, wherein the egress nodes that need to be reached comprise the egress nodes successfully joining in the multicast group;
adding the node information, about the egress nodes that the multicast packet needs to reach, into the multicast packet; and
sending the multicast packet carrying the node information about the egress nodes.

2. The multicast packet forwarding method according to claim 1, wherein the node information, about the egress nodes that the multicast packet needs to reach and determined by the network node, is node information about a second egress node, and the determining, by the network node, the node information about the egress nodes that the multicast packet needs to reach comprises:
if the received multicast packet of the multicast group carries node information, about a first egress node that the multicast packet needs to reach and determined by an upstream network node of the network node, determining, by the network node, the node information about a second egress node that the multicast packet needs to reach, according to the node information, carried in the received multicast packet and about a first egress node that needs to be reached, and border nodes information corresponding to downstream network nodes adjacent to the network node; or
determining, by the network node, the node information, about a second egress node that the multicast packet needs to reach, according to node information, pre-configured locally in the network node and about all the egress nodes of the multicast group downstream the network node; or
directly determining, by the network node, the node information about a second egress node that the multicast packet needs to reach, according to node information, provided by other network entities and about all the egress nodes of the multicast group downstream the network node.

3. The multicast packet forwarding method according to claim 2, wherein the node information is an information collection that comprises the information about the egress nodes, or a result obtained after performing an operation on the node information about the egress nodes.

4. The multicast packet forwarding method according to claim 2, wherein the determining, by the network node, the node information about a second egress node that the multicast packet needs to reach, according to the node information, carried in the received multicast packet and about a first egress node that needs to be reached, and the pre-configured information about the border nodes corresponding to the network node specifically comprises:
if the node information about a first egress node is a first information set that comprises the node information about the egress nodes, wherein the node information about the border nodes corresponding to the network node is a second information set that comprises the node information about the border nodes, comparing, by the network node, the information in the two information sets, and if the node information about one border node in the second information set is consistent with the node information about the egress nodes in the first information set, determining that the information about the border node is the node information about a second egress node;
if the node information about a first egress node carried in the multicast packet is a result obtained after performing an operation on the node information about the egress nodes, wherein the information about the border nodes corresponding to the downstream network nodes adjacent to the network node is a result obtained after performing an operation on the node information about the border nodes, performing operations on the two results to determine the node information about a second egress node that the multicast packet needs to reach.

5. The multicast packet forwarding method according to any one of claims 1 to 4, wherein the information about the egress node is an identifier of the egress node.

6. The multicast packet forwarding method according to claim 5, wherein the identifier of the egress node is placed in a multi-protocol label switching (MPLS) label, a header of a provider backbone transport (PBT), or an extended IP header.

7. The multicast packet forwarding method according to any one of claims 1 to 4, wherein before the determining, by the network node, the node information about the egress nodes that the multicast packet needs to reach, the egress nodes that need to be reached comprising the egress nodes successfully joining in the multicast group, the method further comprises:
if the information about all the egress nodes of the multicast group downstream the upstream network node adjacent to the network node is a result obtained after performing an operation on the information about all the egress nodes of the multicast group downstream the upstream network node adjacent to the network node, wherein the information about the border nodes corresponding to the network node is a result obtained after performing an operation on the information about all the border nodes corresponding to the network node, performing operations on the information about all the egress nodes of the multicast group downstream the upstream network node adjacent to the network node and the information about all the border nodes corresponding to the network node to obtain a result of the information about all the egress nodes of the multicast group downstream the network node.

8. The multicast packet forwarding method according to any one of claims 1 to 4, wherein before the determining, by the network node, the information about all the egress nodes that are downstream the network node and that the multicast packet needs to reach, the method further comprises:
obtaining multicast forwarding indication information capable of denoting the information, provided by other network entities and about all the egress nodes of the multicast group downstream the network node, wherein the multicast forwarding indication information is generated by the other network entities according to a received multicast join request sent by the border nodes or the pre-configured information about all the egress nodes of the multicast group downstream the network node, and the multicast join request at least comprises the information about the multicast group that needs to be joined in and the information about the border nodes.

9. The multicast packet forwarding method according to any one of claims 1 to 4, wherein before the forwarding the multicast packet, the method further comprises: adding the information about all the egress nodes of the multicast group downstream the network node in the multicast packet.

10. A multicast packet forwarding apparatus, disposed in a network node within a network domain, comprising:
a multicast packet receiving unit, adapted to receive a multicast packet of a multicast group;
an information determination unit, adapted to determine node information about egress nodes that the multicast packet needs to reach, wherein the egress nodes that need to be reached comprise the egress nodes successfully joining in the multicast group; and
a multicast packet forwarding unit, adapted to add, according to the information, determined by the information determination unit and about all the egress nodes that are downstream nodes of the network node and that the multicast packet needs to reach, the node information about the egress nodes that the multicast packet needs to reach, into the multicast packet, and send the multicast packet carrying the node information about the egress nodes.

11. The multicast packet forwarding apparatus according to claim 10, wherein the determining, by the information determination unit, that the node information about the egress nodes that the multicast packet needs to reach is node information about a second egress node comprises:
if the received multicast packet of the multicast group carries node information, about a first egress node that the multicast packet needs to reach and determined by an upstream network node of the network node, determining, by the network node, the node information about a second egress node that the multicast packet needs to reach, according to the node information, carried in the received multicast packet and about a first egress node that needs to be reached and, and border nodes information corresponding to downstream network nodes adjacent to the network node; or
determining, by the network node, the node information about a second egress node that the multicast packet needs to reach, according to node information, pre-configured locally in the network node and about all the egress nodes of the multicast group downstream the network node; or
directly determining, by the network node, the node information about a second egress node that the multicast packet needs to reach, according to node information, provided by other network entities and about all the egress nodes of the multicast group downstream the network node.

12. The multicast packet forwarding apparatus according to claim 11, wherein the determining, by the information determination unit, the node information about a second egress node that the multicast packet needs to reach, according to the node information, carried in the received multicast packet and about a first egress node that needs to be reached, and a pre-configured information about the border nodes corresponding to the network node specifically comprises:
if the node information about a first egress node is a first information set that comprises the node information about the egress nodes, and the node information about the border nodes corresponding to the network node is a second information set that comprises the node information about the border nodes, comparing, by the network node, the information in the two information sets; and if the node information about one border node in the second information set is consistent with the node information about the egress nodes in the first information set, determining that the information about the border node is the node information about a second egress node;
if the node information about a first egress node carried in the multicast packet is a result obtained after performing an operation on the node information about the egress nodes, and the information about the border nodes corresponding to the downstream network nodes adjacent to the network node is a result obtained after performing an operation on the node information about the border nodes, performing operations on the two results to determine the node information about a second egress node that the multicast packet needs to reach.

13. A multicast system, comprising:
an ingress node, adapted to receive a multicast packet, determine information about all egress nodes of the multicast packet in a network domain, and forward the multicast packet according to the information about all the egress nodes in the network domain;
intermediate nodes, adapted to receive the multicast packet sent by the ingress node or the adjacent upstream intermediate nodes, determine the information, about all the egress nodes of the multicast packet that are downstream nodes of the intermediate nodes and that the multicast packet needs to reach, and forward the multicast packet according to the information about all the egress nodes of the multicast packet that are downstream nodes of the intermediate nodes and that the multicast packet needs to reach; and
the egress nodes, adapted to receive the multicast packet sent by the adjacent upstream intermediate nodes.
